# EUROPÄISCHE PATENTSCHRIFT

(11) **EP 1 191 274 B1**
(45) Veröffentlichungstag und Bekanntmachung des Hinweises auf die Patenterteilung: **17.03.2004**
(21) Anmeldenummer: 01118081.7
(22) Anmeldetag: 26.07.2001
(51) Int. Cl.: F16L 3/10, F16L 47/00, F16L 41/12

(54) **Rohrschelle mit Scharnier**
Pipe clamp with hinge
Collier de serrage à charnière

(30) Priorität: 21.09.2000 DE 10047474
(43) Veröffentlichungstag der Anmeldung: 27.03.2002
(73) Patentinhaber: Georg Fischer Wavin AG, 4553 Subingen (CH)
(72) Erfinder: Meier, Max, 4571 Lüterkofen (CH); Müller, Reinhard, 78224 Singen (DE)
(74) Vertreter: Weiss, Wolfgang, Dr.

(56) Entgegenhaltungen:
- EP-A- 0 536 427
- EP-A- 0 790 452
- DE-A- 1 909 177
- DE-A- 3 533 951
- GB-A- 2 231 634
- GB-A- 2 330 374
- PATENT ABSTRACTS OF JAPAN vol. 1998, no. 11, 30. September 1998 (1998-09-30) -& JP 10 160046 A (NICHIEI INTEC KK), 16. Juni 1998 (1998-06-16)

## Beschreibung

Die Erfindung betrifft eine Rohrschelle mit einem Rohrschellenoberteil und einem Rohrschellenunterteil, wobei das Rohrschellenoberteil und das Rohrschellenunterteil zusammen ein Scharnier bilden, wobei das Rohrschellenunterteil mindestens einen Vorrastnocken und das Rohrschellenoberteil entsprechende Öffnungen zum Einrasten der Vorrastnocken aufweisen, wobei das Rohrschellenunterteil auf einer ersten Längsseite eine Drehachse aufweist, und wobei das Rohrschellenoberteil auf einer ersten Längsseite ein Lager aufweist, derart, dass die Drehachse nach dem Einführen in das Lager schwenkbar angeordnet ist.

Die bisher bekannten Rohrschellen sind aus vielen Teilen zusammengesetzt. Das Rohrschellenoberteil und das Rohrschellenunterteil sind zunächst getrennt ausgebildet und werden im Gebrauchszustand an beiden Längsseiten mit Schrauben zusammengehalten. In dem Rohrschellenunterteil sind Metallmuttem erforderlich, um eine genügende Festigkeit zu erhalten.

Aus der GB 2330374 A ist eine lösbare Befestigungsklemme mit Schwenkbacken aus flexiblem Material bekannt. Die Befestigungsklemme dient zur Befestigung einer elektrischen Leitung an einer Rohrleitung, wobei die elektrische Leitung parallel zur Rohrleitung geführt wird. Die Befestigungsklemme besteht aus zwei ein Scharnier bildenden Halbschalen, die auf der einen Seite ineinander eingehängt und auf der anderen Seite eingerastet werden. Zum Einhängen wird ein Finger der ersten Halbschale in eine dazu passend ausgebildete Öffnung der zweite Halbschale eingebracht. Auf der gegenüberliegenden Seite weist die erste Halbschale eine federnde Rastzunge auf, die in einer dazupassenden Rastaufnahme der zweiten Halbschale eingerastet werden kann. Die Aufgabe der vorliegenden Erfindung besteht somit darin, eine einfach handhabbare Rohrschelle zu schaffen, die aus wenigen Teilen besteht.

Erfindungsgemäss wird die Aufgabe gelöst durch eine Rohrschelle mit einem Rohrschellenoberteil und einem Rohrschellenunterteil, wobei das Rohrschellenoberteil und das Rohrschellenunterteil zusammen ein Scharnier bilden, wobei das Rohrschellenunterteil mindestens einen Vorrastnocken und das Rohrschellenoberteil entsprechende Öffnungen zum Einrasten der Vorrastnocken aufweisen, wobei das Rohrschellenunterteil auf einer ersten Längsseite eine Drehachse aufweist, und wobei das Rohrschellenoberteil auf einer ersten Längsseite ein Lager aufweist, derart, dass die Drehachse nach dem Einführen in das Lager schwenkbar angeordnet ist, wobei die Drehachse sich über die gesamte Längsseite des Rohrschellenunterteils erstreckt.

Der Schwenkbereich erstreckt sich über einen Öffnungswinkel von mehr als 90°.

Das Rohrschellenunterteil wird mit der Seite an der sich die Drehachse befindet, in das Lager des Rohrschellenoberteils eingeklickt, so dass sich das Rohrschellenunterteil um die Drehachse schwenken lässt. Das Lager besitzt einen nahezu kreisförmigen Querschnitt von circa 200°, so dass das Lager circa 160° geöffnet ist, um die Drehachse kraftschlüssig aufnehmen zu können. Das Lager hat somit die Funktion eines Widerlagers und zusätzlich bildet es ein Schwenklager. Das Rohrschellenunterteil mit den Vorrastnocken wird gegen das Rohrschellenoberteil geschwenkt, bis die Vorrastnocken in die entsprechenden Öffnungen an dem Rohrschellenoberteil einrasten.

Vorzugsweise sind auf der der Drehachse bzw. des Lagers gegenüberliegenden Seite im Rohrschellenoberteil Bohrungen für Schrauben zur Befestigung des Rohrschellenunterteils an dem Rohrschellenoberteil angeordnet. Die Schrauben sind als für den Kunststoff selbstschneidende Schrauben ausgebildet.

Nachdem das Rohrschellenunterteil in dem Rohrschellenoberteil eingerastet ist, kann der Monteur in einfacher Weise das Rohrschellenunterteil an dem Rohrschellenoberteil mittels selbstschneidender Schrauben befestigen.

Gemäss einer bevorzugten Ausführungsform weist das Rohrschellenunterteil unterhalb der Drehachse Öffnungen und Stege und das Rohrschellenoberteil Fortsätze auf, die in die Öffnungen des Rohrschellenunterteils eingreifen.

Zur Stabilisierung sind an dem Rohrschellenoberteil kammartig Fortsätze angeordnet, die im eingeklemmten Zustand in am Rohrschellenunterteil angeordneten Öffnungen eingreifen.

Weiterhin kann das Rohrschellenoberteil sowie das Rohrschellenunterteil Rippen zur Stabilisierung und/oder Aussparungen zur Materialersparnis aufweisen.

Vorzugsweise besteht die Rohrschelle aus Kunststoff.

Ein Ausführungsbeispiel ist in der Zeichnung dargestellt. Es zeigen
- Fig. 1: eine dreidimensionale Ansicht des Rohrschellenunterteils und
- Fig. 2: eine Schnittansicht der zusammengebauten Rohrschelle.

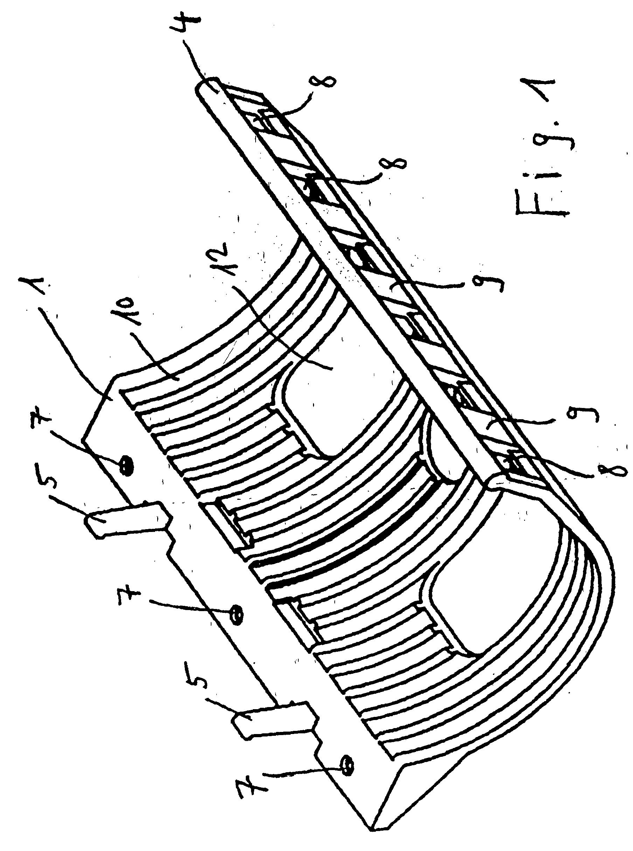

Das in Figur 1 dargestellte Rohrschellenunterteil 1 weist an der einen Längsseite eine Drehachse 4 auf. Die Drehachse 4 ist mittels Stegen 9 an dem eigentlichen Rohrschellenunterteil 1 einstückig befestigt. Zwischen den Stegen 9 befinden sich Öffnungen 8. An der gegenüberliegenden Seite sind die Vorrastnocken 5 und die Bohrungen 7 für die Durchführung der Schrauben 6 zu sehen. In dem Rohrschellenunterteil 1 sind zur Stabilisierung Rippen 10 und zur Materialeinsparung Aussparungen 12 angeordnet.

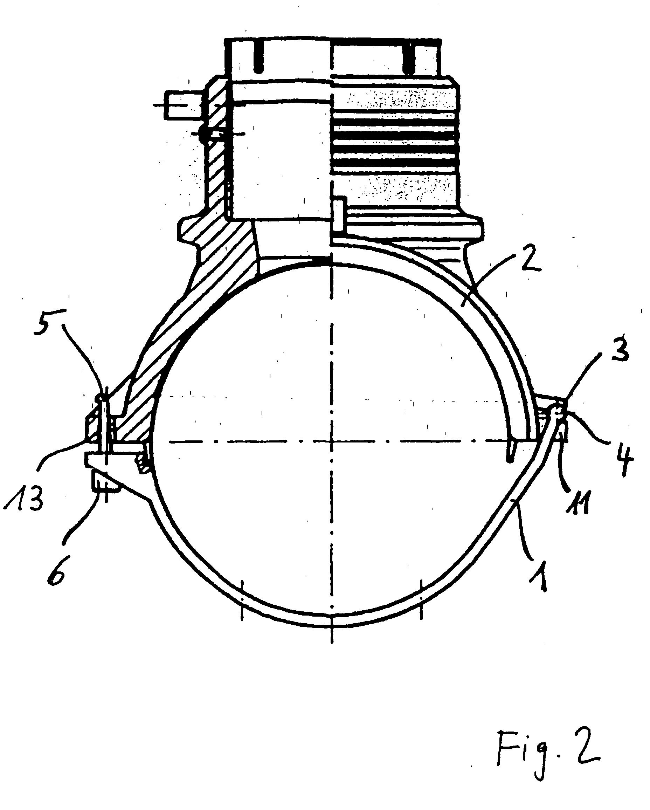

Die Figur 2 zeigt die zusammengebaute Rohrschelle im Querschnitt. Das Rohrschellenunterteil 1 ist mittels der Drehachse 4 im Lager 3 eingeklemmt. Die Fortsätze 4, die kammartig an dem Rohrschellenoberteil 2 angeordnet sind, greifen durch die Öffnungen 8 des Rohrschellenunterteils 1 (siehe Figur 1). Auf der gegenüberliegenden Seite sind die Vorrastnocken 5 in die dafür vorgesehenen Öffnungen 13 eingerastet. Die selbstschneidenden Schrauben 6 verbinden das Rohrschellenunterteil 1 mit dem Rohrschellenoberteil 2.

Die Montage läuft folgenderweise ab:

Das lose Rohrschellenunterteil 1 wird mit der Drehachse 4 in das Lager 3 eingeklickt, so dass es sich um die Drehachse schwenken lässt. Das Lager 3 umgreift dabei die Drehachse kreisförmig mit einem Winkelbereich von circa 200°. Das Rohrschellenunterteil 1 ist somit mit dem Rohrschellenoberteil 2 ohne Schrauben an der Lagerseite kraftschtüssig verbunden. Das Rohrschellenunterteil wird dann gegen das Rohrschellenoberteil 2 in der Weise geschwenkt, dass die Vorrastnocken 5 in die dafür vorgesehenen Öffnungen 13 einrasten. Das Rohrschellenunterteil 1 hängt nun mit einem gewissen Abstand lose am Rohrschellenoberteil 2 und muss nicht vom Monteur mit einer Hand zur Einführung der Schrauben festgehalten werden. Der Monteur kann nunmehr in einfacher Weise das Rohrschellenunterteil 1 an das Rohrschellenoberteil 2 mittels der selbstschneidenden Schrauben 6 verschrauben.

Die mit der Erfindung verbundenen Vorteile bestehen insbesondere darin, dass die Rohrschelle sehr einfach aufgebaut ist und nur aus zwei Teilen besteht. Mit nur wenigen Schrauben wird die erforderliche Festigkeit erreicht. Ausser den selbstschneidenden Schrauben sind keine Metallteile erforderlich. Es wird eine zweihändige Montage ermöglicht. Ausserdem ist mit der erfindungsgemässen Rohrschelle ein Öffnungswinkel grösser 90° erzielbar. Das Rohrschellenunterteil ist an der Lagerseite kraftschlüssig mit dem Rohrschellenoberteil verbunden.

## Patentansprüche

1. Rohrschelle mit einem Rohrschellenoberteil (2) und einem Rohrschellenunterteil (1), wobei das Rohrschellenoberteil (2) und das Rohrschellenunterteil (1) zusammen ein Scharnier bilden, wobei das Rohrschellenunterteil (1) mindestens einen Vorrastnocken (5) und das Rohrschellenoberteil (2) entsprechende Öffnungen (13) zum Einrasten der Vorrastnocken (5) aufweisen, wobei das Rohrschellenunterteil (1) auf einer ersten Längsseite eine Drehachse (4) aufweist, und wobei das Rohrschellenoberteil (2) auf einer ersten Längsseite ein Lager (3) aufweist, derart, dass die Drehachse (4) nach dem Einführen in das Lager (3) schwenkbar angeordnet ist, **dadurch gekennzeichnet, dass** die Drehachse (4) sich über die gesamte Längsseite des Rohrschellenunterteils (1) erstreckt.

2. Rohrschelle nach Anspruch 1, **dadurch gekennzeichnet, dass** auf der der Drehachse (4) bzw. des Lagers (3) gegenüberliegenden Längsseite im Rohrschellenoberteil (2) bzw. im Rohrschellenunterteil (1) Bohrungen (7) und Schrauben (6) zur Befestigung des Rohrschellenunterteils (1) an dem Rohrschellenoberteil (2) angeordnet sind.

3. Rohrschelle nach Anspruch 2, **dadurch gekennzeichnet, dass** die Schrauben (6) als für den Kunststoff selbstschneidende Schrauben (6) ausgebildet sind.

4. Rohrschelle nach einem der Ansprüche 1 bis 3, **dadurch gekennzeichnet, dass** das Rohrschellenunterteil (1) über einen Öffnungswinkel von grösser als 90° schwenkbar ist.

5. Rohrschelle nach mindestens einem der vorherigen Ansprüche, **dadurch gekennzeichnet, dass** das Rohrschellenunterteil (1) unterhalb der Drehachse (4) Öffnungen (8) und Stege (9) aufweist, wobei Fortsätze (11) am Rohrschellenoberteil (2) in die Öffnungen (8) eingreifen.

6. Rohrschelle nach mindestens einem der vorherigen Ansprüche, **dadurch gekennzeichnet, dass** das Rohrschellenunterteil (1) Rippen (10) und/oder Aussparungen (12) aufweist.

7. Rohrschelle nach mindestens einem der vorherigen Ansprüche, **dadurch gekennzeichnet, dass** die Rohrschelle aus Kunststoff besteht.

## Claims

1. Pipe clamp with a top pipe-clamp part (2) and a bottom pipe-clamp part (1), the top pipe-clamp part (2) and the bottom pipe-clamp part (1) together forming a hinge, the bottom pipe-clamp part (1) having at least one latching protuberance (5) and the top pipe-clamp part (2) having corresponding openings (13) into which the latching protuberances (5) latch, the bottom pipe-clamp part (1) having a pivot pin (4) on a first longitudinal side, and the top pipe-clamp part (2) having a bearing (3) on a first longitudinal side such that the pivot pin (4) is arranged in a pivotable manner once it has been introduced into the bearing (3), **characterized in that** the pivot pin (4) extends over the entire longitudinal side of the bottom pipe-clamp part (1).

2. Pipe clamp according to Claim 1, **characterized in that**, for the purpose of fastening the bottom pipe-clamp part (1) on the top pipe-clamp part (2), bores (7) and screws (6) are arranged on that longitudinal side of the top pipe-clamp part (2) and bottom pipe-clamp part (1) which is located opposite the pivot pin (4) and the bearing (3), respectively.

3. Pipe clamp according to Claim 2, **characterized in that** the screws (6) are designed as screws (6) which are self-tapping in respect of the plastic.

4. Pipe clamp according to one of Claims 1 to 3, **characterized in that** the bottom pipe-clamp part (1) can be pivoted via an opening angle of more than 90°.

5. Pipe clamp according to at least one of the preceding claims, **characterized in that** the bottom pipe-clamp part (1) has openings (8) and crosspieces (9) beneath the pivot pin (4), extensions (11) on the top pipe-clamp part (2) engaging in the openings (8).

6. Pipe clamp according to at least one of the preceding claims, **characterized in that** the bottom pipe-clamp part (1) has ribs (10) and/or cutouts (12).

7. Pipe clamp according to at least one of the preceding claims, **characterized in that** the pipe clamp consists of plastic.

## Revendications

1. Collier de serrage avec une partie supérieure de collier de serrage (2) et une partie inférieure de collier de serrage (1), la partie supérieure de collier de serrage (2) et la partie inférieure de collier de serrage (1) formant ensemble une charnière, la partie inférieure de collier de serrage (1) présentant au moins un ergot d'arrêt initial (5) et la partie supérieure de collier de serrage (2) présentant des ouvertures correspondantes (13) pour l'encliquetage des ergots d'arrêt initiaux (5), la partie inférieure de collier de serrage (1) présentant sur un premier côté longitudinal un axe de rotation (4), et la partie supérieure de collier de serrage (2) présentant sur un premier côté longitudinal un palier (3), de telle sorte que l'axe de rotation (4) soit disposé de manière à pouvoir pivoter après son insertion dans le palier (3), **caractérisé en ce que** l'axe de rotation (4) s'étend sur tout le côté longitudinal de la partie inférieure de collier de serrage (1).

2. Collier de serrage selon la revendication 1, **caractérisé en ce que** du côté longitudinal opposé à l'axe de rotation (4), respectivement au palier (3) dans la partie supérieure de collier de serrage (2), respectivement dans la partie inférieure de collier de serrage (1), on prévoit des alésages (7) et des vis (6) pour la fixation de la partie inférieure de collier de serrage (1) sur la partie supérieure de collier de serrage (2).

3. Collier de serrage selon la revendication 2, **caractérisé en ce que** les vis (6) sont réalisées sous la forme de vis (6) autotaraudeuses pour le plastique.

4. Collier de serrage selon l'une quelconque des revendications 1 à 3, **caractérisé en ce que** la partie inférieure de collier de serrage (1) peut pivoter suivant un angle d'ouverture supérieur à 90°.

5. Collier de serrage selon au moins l'une quelconque des revendications précédentes, **caractérisé en ce que** la partie inférieure de collier de serrage (1) présente, sous l'axe de rotation (4), des ouvertures (8) et des ailettes (9), des saillies (11) sur la partie supérieure de collier de serrage (2) venant en prise dans les ouvertures (8).

6. Collier de serrage selon au moins l'une quelconque des revendications précédentes, **caractérisé en ce que** la partie inférieure de collier de serrage (1) présente des nervures (10) et/ou des évidements (12).

7. Collier de serrage selon au moins l'une quelconque des revendications précédentes, **caractérisé en ce que** le collier de serrage est réalisé en plastique.
